# EUROPEAN PATENT SPECIFICATION

(11) **EP 1 987 713 B1**
(45) Date of publication and mention of the grant of the patent: **26.01.2011**
(21) Application number: 08155549.2
(22) Date of filing: 01.05.2008
(51) Int. Cl.: A01D 41/16

(54) **Apparatus and method for automatically coupling of electrical and hydraulic systems of a header of an agricultural harvesting machine**
Vorrichtung und Verfahren zur automatischen Kopplung elektrischer und hydraulischer Systeme eines Schneidwerks einer Erntemaschine
Appareil et procédé pour couplage automatique de systèmes électriques et hydrauliques d'une table de coupe d'une moissonneuse agricole

(30) Priority: 01.05.2007 US 799123
(43) Date of publication of application: 05.11.2008
(73) Proprietor: CNH Belgium N.V., 8210 Zedelgem (BE)
(72) Inventor: Ricketts, Jonathan E., Ephrata, PA 17522 (US); Wagner, Bradley J., Wrightsville, PA 17368 (US)
(74) Representative: CNH IP Department

(56) References cited:
- EP-A- 0 676 123
- WO-A-02/20906
- DE-U1- 9 013 888
- FR-A- 2 082 257
- US-B1- 6 519 923

## Description

This invention relates to apparatus and a method for automatically connecting electrical and hydraulic systems, respectively, of a header and an agricultural harvester such as a combine, windrower or the like, and more particularly, which provides hands-free, automatic coupling of couplers or connectors of the respective systems, as the header is installed on the harvester, and hands-free, automatic decoupling and disconnection when that header is removed.

Agricultural combines are typically configured for interchangeable connection of different headers to a feeder on the front end of the combine, for harvesting different types of crops from a field. For example, one type of header will be used for harvesting corn or maize, and another for smaller grains, such as soy beans, rice and wheat. For some applications, headers are required to be installed and removed by a person working alone. And, in some instances, installation and removal must be done several times a day, for instance, wherein a farming operation comprises several parcels of land to be harvested, and the combine must be driven over roads or lanes from parcel to parcel, with the header removed. This can make header installation and removal a burdensome and time consuming task.

Installation of a header typically involves manoeuvring the combine into a position wherein the feeder is positioned and oriented in a special manner for engaging lifting elements on the feeder and header. Such lifting elements typically include at least one receiver such as a hook, on an upper portion of a front end of the feeder, which is configured for cooperatively or pivotally receiving and engaging at least one structural element on an upper portion of a rear end of the header, which structural element can include, for instance, a pin, an edge, or a beam. The lifting elements, are typically located adjacent to, or form parts of, interface or face plate structures bounding or framing an inlet opening of the feeder, and a discharge opening of the header, which openings are mated together for the passage of crop material from the header to the feeder.

Such special manner of positioning of the feeder relative to the header typically involves tilting the feeder such that the hook can engage the pin, edge or beam on the header, and such that the lower portions of the feeder and the header are spaced apart, then raising the feeder to lift the header to more fully engage it with the hook and pivot the bottom portions together, thereby mating the openings. The feeder movements are made using an actuator or actuators such as a fluid cylinder. The front interface structure can also optionally be supported for controlled sideward or lateral tilting relative to the feeder.

A typical header will include at least one driven or powered element for execution of the crop harvesting function and conveying harvested crops to the discharge outlet, for instance, for a grain header, a sickle or other cutter, a reel, conveyor mechanisms, and one or more actuators for adjusting the position of the reel; and for a corn header, gathering chains, strippers, and conveyors. Such drive elements can be driven variously by a power take off from the engine of the harvester, or can include fluid or electric motors on the header itself. The actuators can be variously fluid or electrical powered. Additionally, the header can include one or more sensors and/or controllers that are required to be connected to a system or systems of the combine for providing feedback and/or controlling various of the drivers and/or actuators, providing header recognition functions, and/or for sensing one or more parameters, such as a position of the header itself, or an element thereof. As a result, connection of various of these apparatus on the header to a source of pressurized fluid and a return reservoir on the harvester, and to a source of electrical power and/or the required system or systems, is required.

Representative known apparatus for jointly making fluid and electrical connections and couplings for various of these devices and systems utilizing mating coupler blocks, are illustrated in US 6,519,923 and US 6,735,929.

A shortcoming, however, of the apparatus of each of the above referenced patents, is that the operator is required to exit the operator cabin of the harvesting machine and manually make the connections or couplings, which can be disadvantageous in terms of both productivity and operator satisfaction.

Accordingly, what is sought is apparatus and a method for automatically connecting electrical and hydraulic systems, respectively, of a header and an agricultural harvester which provides hands-free, automatic coupling of couplers or connectors of the respective systems, as the header is installed on the harvester, and also hands-free, automatic decoupling and disconnection when that header is removed, so as to be advantageous productivity-wise and satisfaction-wise.

According to one aspect of the present invention there is provided an agricultural harvesting machine comprising:
a self-propelled frame having a feeder having a front end portion having a forwardly facing inlet opening for receiving a flow of harvested crops, a front interface structure bounding the inlet opening, and apparatus controllably operable for moving the front end portion of the feeder upwardly and downwardly relative to the frame;
a header including harvesting apparatus operable for harvesting crops from a field and conveyor apparatus for conveying the harvested crops to a discharge opening, and the header including a rear interface structure bounding the discharge opening;
the front interface structure of the feeder and the rear interface structure of the header including lifting elements, respectively, which are pivotably engageable when brought together in a predetermined manner with the lower portions of the interface structures spaced apart, such that when the feeder is moved upwardly with the lifting elements cooperatively engaged and the lower portions of the interface structures spaced apart, the header will be lifted by the feeder and the lower portions of the interface structures will be relatively pivoted into at least substantially abutting relation to align the discharge opening and the inlet opening for passage of harvested crop material therethrough;
a first coupler block supported on the feeder and including at least one fluid coupler and at least one electrical contact; and
a second coupler block supported on the header and including at least one fluid coupler and at least one electrical contact;
characterised in that the fluid couplers on the first coupler block and on the second coupler block are configured and positioned, respectively, so as to couple, and the electrical contacts on the coupler blocks are configured and positioned to be brought into contact, as the interface structures are relatively pivoted into the at least substantially abutting relation.

According to a further aspect of the invention there is provided a method for automatically coupling fluid systems and electrical systems, respectively, of a header and a feeder of an agricultural harvesting machine, comprising steps of as the header is lifted by the feeder for coupling together therewith, comprising:
providing a lifting element on a front upper portion of a feeder configured for pivotally engaging a lifting element on a rear upper portion of a header as the lifting element of the feeder is moved upwardly into contact with the lifting element on the header with lower portions of the feeder and the header spaced apart, the lifting elements being further configured such that when pivotally engaged and the upward movement of the feeder is continued, the header will be lifted by the feeder and pivoted so as to bring the lower portions of the feeder and the header together; and
providing a first coupler block supported on the feeder and including at least one fluid coupler and at least one electrical contact, and a second coupler block supported on the header and including at least one fluid coupler and at least one electrical contact, the fluid couplers on the first coupler block and on the second coupler block being configured and positioned, respectively, so as to couple, and the electrical contacts on the coupler blocks being configured and positioned so as to be brought into contact, as the lower portions of the feeder and the header are brought together,
characterised in that the method further comprises:
moving the lifting element of the feeder upwardly into contact with the lifting element on the header with lower portions of the feeder and the header spaced apart, and continuing the upward movement of the feeder to lift and pivot the header to bring the lower portions of the feeder and the header together so as to couple the couplers and bring the electrical contacts into contact.

Thus is provided apparatus and a method for automatically connecting electrical and hydraulic systems, respectively, of a header and an agricultural harvester which provides hands-free, automatic coupling of couplers or connectors of the respective systems, as the header is installed on the harvester, and also hands-free, automatic decoupling and disconnection when that header is removed, so as to be advantageous productivity-wise and satisfaction-wise.

According to a preferred method of the invention, the fluid couplers are coupled and the electrical contacts are brought into contact, as the interface structures are relatively pivoted into the at least substantially abutting relation. And, the fluid couplers are decoupled and the electrical contacts broken, as the interface structures are relatively pivoted from the at least substantially abutting relation, as the header is removed.

An embodiment of the invention will now be described in further detail, by way of example only, with reference to the accompanying drawings, in which:
Figure 1 is a side view of an agricultural combine and a header connectable thereto, including apparatus operable according to a method of the invention for automatically connecting electrical and hydraulic systems of the combine and header as the header is connected to a feeder of the combine;
Figure 2 is another side view of the combine of Figure 1 with the header connected to the feeder, and showing the electrical and hydraulic systems connected by the apparatus of the invention;
Figure 3 is an enlarged fragmentary side view of the feeder of the combine of Figures 1 and 2 oriented in a position for pivotal engagement of lifting elements thereof with lifting elements of the header illustrated in dotted lines, and showing associated aspects of the apparatus of the invention;
Figure 4 is another enlarged fragmentary side view of the feeder, showing engagement of the lifting elements for connection of the header, and the apparatus of the invention automatically connecting electrical and hydraulic systems of the combine and header;
Figure 5 is an enlarged schematic front view of the feeder and the apparatus of the invention;
Figure 6 is an enlarged schematic rear view of the header and the apparatus of the invention;
Figure 7 is an enlarged rear view of aspects of the apparatus of the invention mounted on a side of the feeder;
Figure 8 is another enlarged side view showing initiation of the pivotal engagement of the lifting elements and associated initial positioning of elements of the apparatus of the invention;
Figure 9 is another enlarged side view showing the lifting elements of the feeder and header fully engaged and apparatus of the invention automatically connected together for coupling fluid and electrical systems of the feeder and header;
Figure 10 is a fragmentary simplified schematic side view of initial coupling of aspects of the apparatus of the invention as the feeder and header are being relatively pivotally moved toward one another;
Figure 11 is another fragmentary simplified schematic side view of the aspects of the apparatus of the invention during further pivoting together of the feeder and header; and
Figure 12 is still another fragmentary simplified schematic side view showing the aspects of the apparatus of the invention coupled together when the feeder and the header are fully connected.

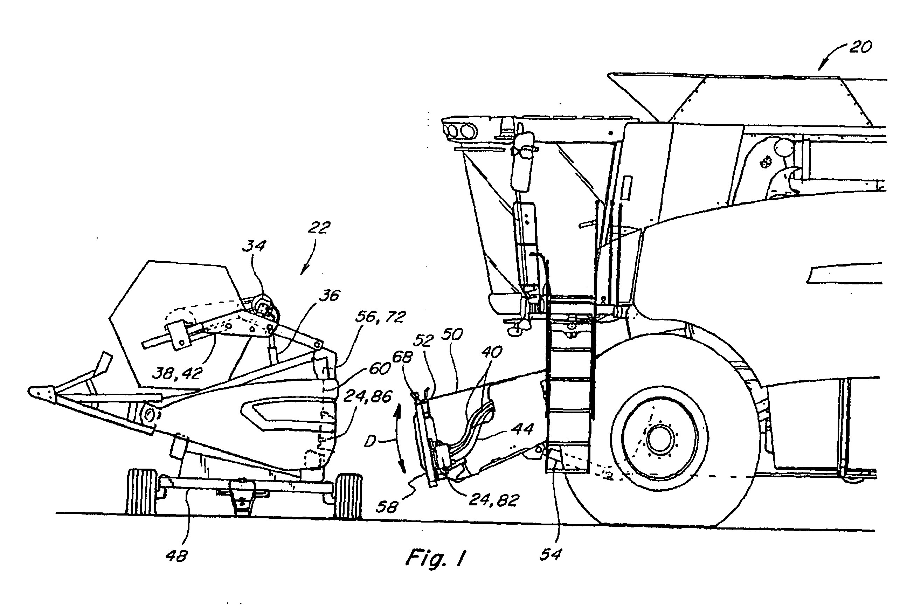

Referring now to the drawings, and particularly to Figure 1, a self-propelled agricultural combine 20 of conventional, well-known construction, is illustrated in association with a header 22 also of conventional, well-known construction. Header 22 is connectable to combine 20 in the well-known manner, and both include apparatus 24 of the present invention for automatically connecting fluid systems and electrical systems, respectively, thereof, during the connection of the header to the combine. Apparatus 24 of the invention is also operable for automatically disconnecting the respective fluid and electrical systems, when header 22 is disconnected from combine 20.

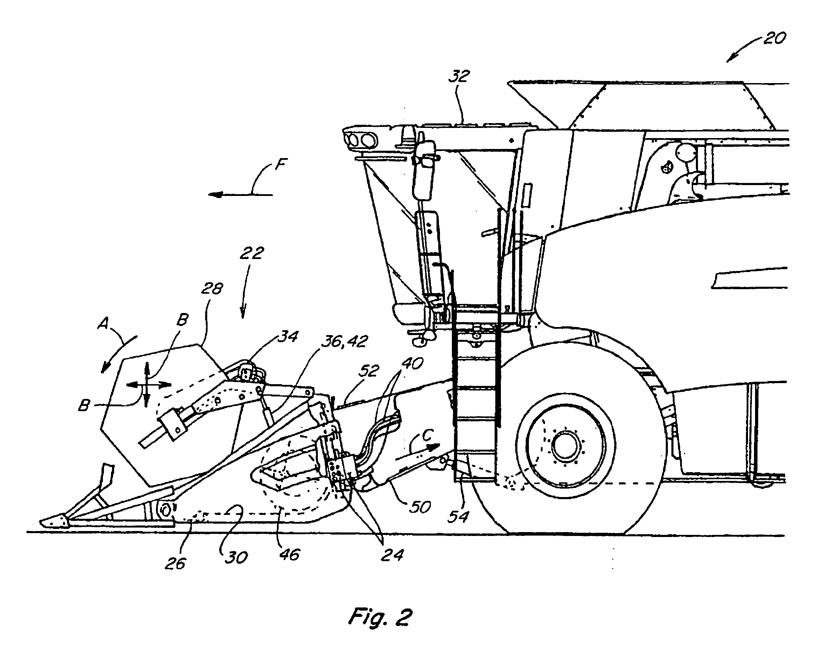

Referring also to Figure 2, header 22 illustrated is of the variety known as a grain header, and is configured for harvesting small grains, such as, but not limited to, wheat, soybeans and other legumes, and rice, as combine 20 is moved in a forward direction, denoted by arrow F over an agricultural field. Header 22 is intended to be representative of a wide variety of different headers of various widths that can be used with a combine such as combine 20, such as, but not limited to, corn headers and specialty grain headers. Header 22 includes harvesting apparatus including an elongate, sidewardly extending sickle 26 reciprocatingly operable for severing crops from a field, and a reel 28 rotatable, as denoted by arrow A, for feeding the crops to sickle 26 and conveying the cut crops rearward onto a pan 30 of the header. Sickle 26 can be powered in any suitable manner, for instance, using a fluid motor which receives pressurized fluid from a pressurized fluid source, such as a pump, on combine 20; a PTO drive; or an electric motor, in the well-known, conventional manner (not shown).

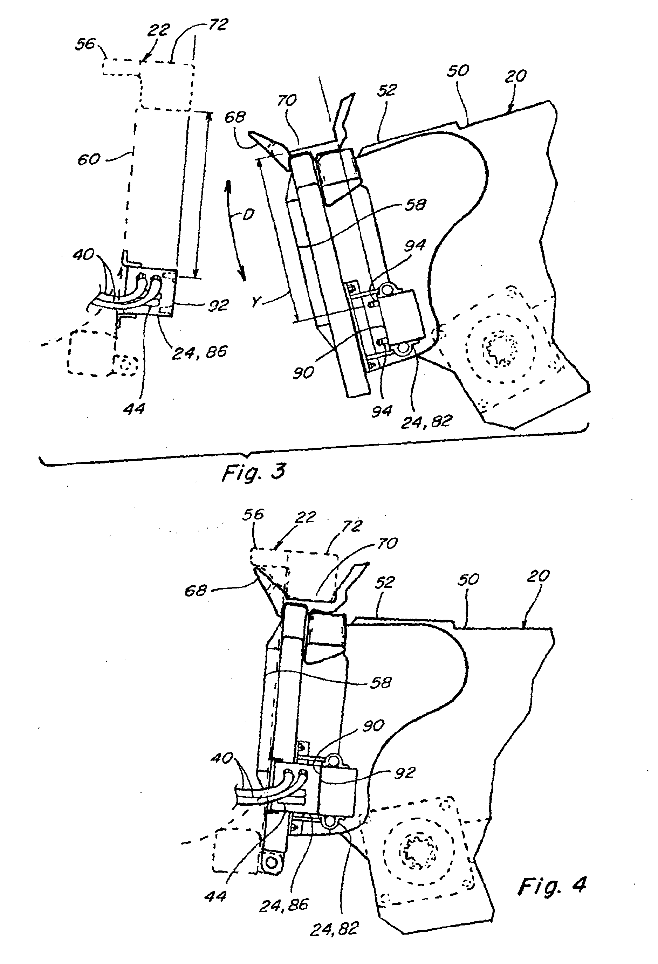

The speed of rotation of reel 28 is continuously controllable during the harvest operation by an operator in operator cabin 32 using a control (not shown), and the reel will be controllably movable in upward, downward, forward and rearward directions as denoted by directional arrows B, in the well-known, conventional manner, for achieving desired crop harvesting characteristics. A representative fluid motor 34 for rotatably driving reel 28, and a representative fluid controlled actuator 36 for controlling vertical position of the reel, are illustrated. Motor 34 and actuator 36 are conventionally constructed and operable hydraulic devices comprising elements of a fluid system of header 22, which elements will variously receive pressurized fluid from the pump on combine 20, and will return fluid to a reservoir on the combine, through fluid lines 40 (see also Figures 3 and 4) in the well-known manner, and which will be automatically coupled together by apparatus 24 of the invention, when header 22 is connected to combine 20 as illustrated in Figures 2 and 4, as will be explained. Additional actuators for effecting forward and rearward movements of reel 28 are concealed by telescopically extendable reel support arms 38, and will also be connected via connection of associated fluid lines 40 of the header and combine.

Header 22 will also include electrical devices which comprise elements of an electrical system of the header, which devices can include, but are not limited to, sensors such as a speed sensor 42 associated with fluid motor 34, various position sensors, and the like. The electrical devices of the electrical system will likewise be connected to corresponding systems of combine 20, via connection of a wiring harness 44 of the header with a wiring harness 44 of the combine by apparatus 24 of the invention, as will be explained. Here, it should be noted that fluid lines 40 and harness 44 are deleted from various of the Figures for clarity.

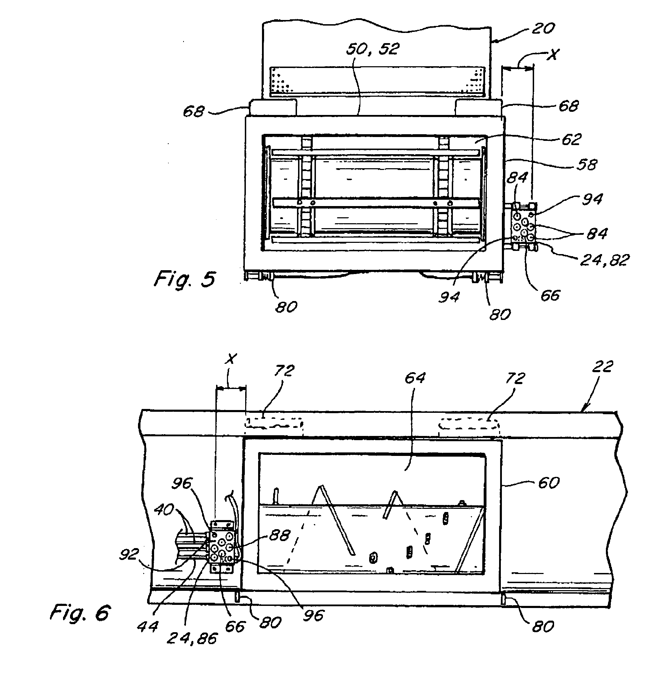

Other devices and/or mechanisms of header 22 that can be powered via connection to combine 20 using apparatus 24 of the invention can include, but are not limited to, conveyor apparatus, illustrated by an auger 46 extending substantially the width of header 22, which is rotatable for conveying the harvested crops toward a centre region of the header for passage through a discharge opening 64 thereof (Figure 6), and a device (not shown) for providing identification or recognition of the header when connected to the combine.

In Figure 1, header 22 is shown supported on a conventional wheeled header cart 48 towable by combine 20 or another vehicle, for transporting the header when disconnected from combine 20, from location to location, such as between fields and the like.

Combine 20 includes a feeder 50 operable for receiving harvested crops from a header, such as header 22, connected to a front end 52 of the feeder, and conveying the crops rearwardly and upwardly within the feeder, as denoted by arrow C in Figure 2, to a threshing system (not shown) located within the combine, in the well-known, conventional manner. Feeder 50 is pivotally supported for upward and downward movement of front end 52, as denoted by arrows D (Figures 1 and 3), by a lift cylinder 54, also in the well-known manner.

Referring also to Figures 5 and 6, front end 52 of feeder 50 includes a front interface structure 58, and a rear end 56 of header 22 includes a rear interface structure 60, which essentially comprise rectangular face plates that bound an inlet opening 62 on front end 52 and a discharge opening 64 on rear end 56, respectively, and which are matingly positionable in abutting relation, to provide a continuous passage for the crop material to flow between header 22 and feeder 50. This mating relationship is achieved by the connection of header 22 to feeder 50, as explained next. At the same time, the fluid lines 40 of header 22 will be automatically coupled to the corresponding fluid lines 40 of combine 20, and electrical contacts 66 of wiring harnesses 44 of the header and combine are automatically connected, by the connection or coupling of apparatus 24 of the invention, as is also explained.

Front end 52 of header 50 includes lifting elements 68 mounted adjacent to opposite sides of an upper end of front interface structure 58, which lifting elements 68 are each preferably an upwardly open hook shaped member defining an elongate, receptacle 70 of rectangular or other suitable sectional shape. Rear end 56 of header 22 includes lifting elements 72 disposed adjacent to opposite sides of an upper end of rear interface structure 60, which lifting elements 72 preferably comprise sidewardly extending rectangular pins or rods which are cooperatively and pivotally engageable with lifting elements 68, so as to be receivable and positionable within respective receptacles 70 when header 22 is connected to feeder 50 and interface structures 58 and 60 are in the proper abutting relation.

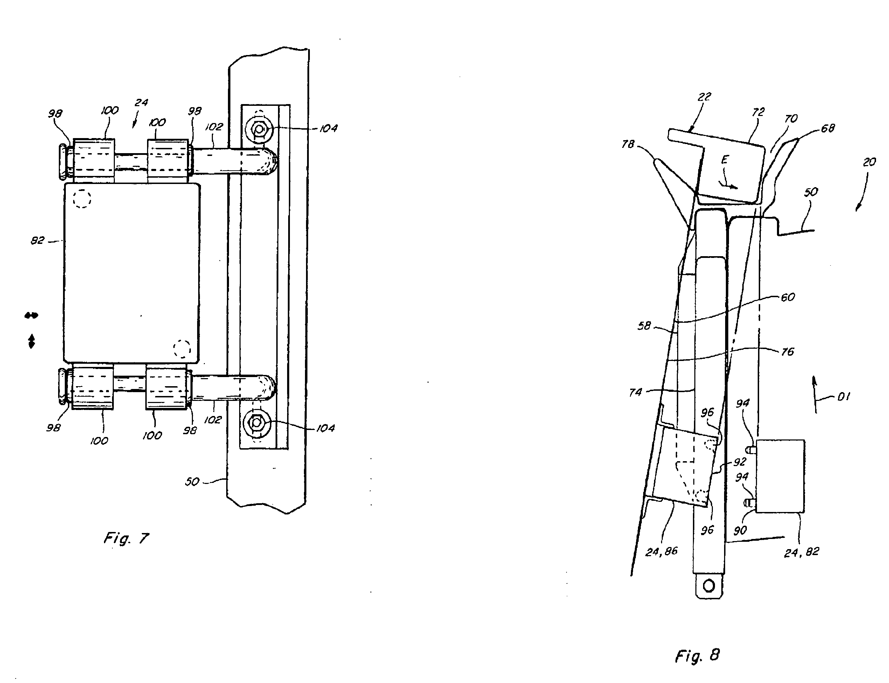

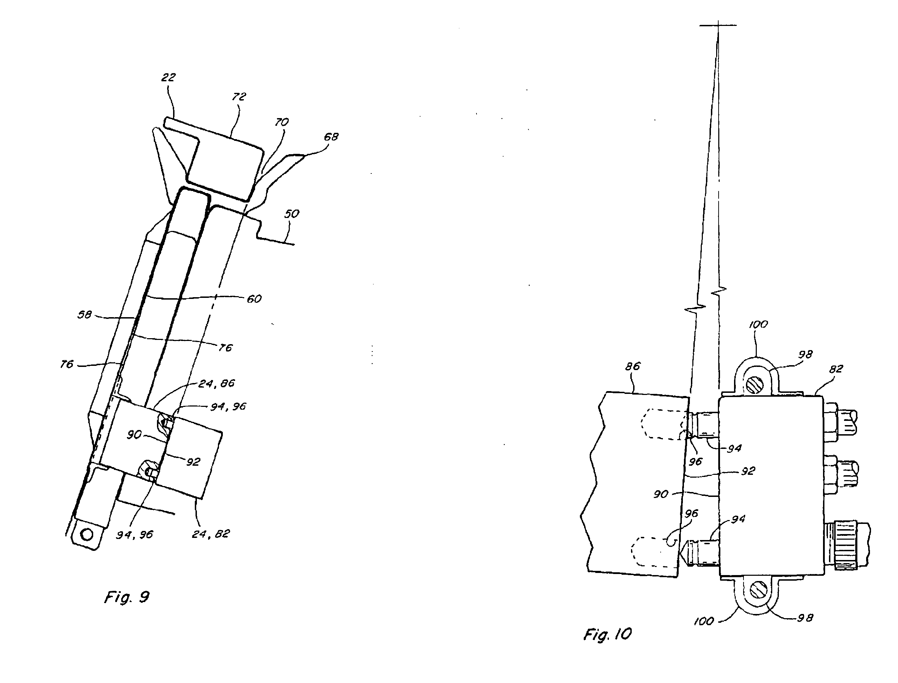

Referring also to Figure 8, in operation, lifting elements 72 are initially pivotally engageable with lifting elements 68, by the upward movement of feeder 50, as effected by operation of lift cylinder 54, when combine 20 is properly positioned in relation to header 22, as illustrated. It should be noted here that, during this initial engagement, the feeder will be angularly oriented or tilted relative to the header, such that a lower portion 74 of front interface structure 58 will be spaced apart from a lower portion 76 of rear interface structure 60, which will facilitate insertion of a forwardmost edge 78 of lifting elements 68 into a space forwardly of lifting elements 72 of the header to enable initiation of the connection. Then, by continued upward movement of feeder 50, as denoted by arrow D1, header 22 will be lifted, such that lifting elements 72 will be pivoted within receptacle 70, as denoted by arrow E, so as to be fully cooperatively received or seated in the receptacle, as illustrated in Figures 4 and 9. During this pivoting movement, lower portions 74 and 76 are relatively pivotally moved toward one another, until interface structures 58 and 60 are in the desired abutment. Header 22 can now be releasably latched in this position, for instance, using a conventional latch mechanism 80 (Figures 5 and 6) in the conventional manner to be fully and completely mounted on feeder 50.

Apparatus 24 of the invention includes a first coupler block 82 supported on front end 52 of feeder 50 and including a plurality of fluid couplers 84, connected respectively, with fluid lines 40 of the combine, and a plurality of electrical contacts 66. Apparatus 24 includes a second coupler block 86 supported on rear end 56 of header 22, and including a plurality of fluid couplers 88, connected respectively, with fluid lines 40 of the header, and a plurality of electrical contacts 66.

Here, fluid couplers 84 are located on a forwardly facing surface 90 of coupler block 82, and fluid couplers 88 are located on a rearwardly facing surface 92 of coupler block 86, and are arranged in predetermined positions, such that predetermined ones of couplers 84 will couple to form a high-pressure, fluid sealed connection with corresponding couplers 88, when surfaces 90 and 92 are brought into abutting relation. Preferably, couplers 84 and 86 are well-known, commercially available varieties of fluid couplers. Similarly, electrical contacts 66 are located on surfaces 90 and 92 in predetermined positions, so as to make electrical contact in the appropriate manner when surfaces 90 and 92 are brought into the abutting relation. For instance, contacts 66 on one or both coupler blocks can be spring-loaded devices, as are also well known and commercially available.

Surface 90 of coupler block 82 additionally includes at least one, and preferably two, aligning pins 94 extending forwardly from predetermined locations thereon, which pins 94 are slidably receivable within aligning holes 96 at predetermined locations in surface 92 of block 86, as lower portions 74 and 76 of header 22 and feeder 50 are pivoted together. Preferably in this regard, coupler blocks 82 and 86 are located beside respective interface structures 58 and 60, as shown, in positions such that surfaces 90 and 92 will pivot into aligned abutment as the interface structures are brought together. For aligning purposes, for example, an upper one of aligning pins 94 is located a horizontal distance X from a reference, such as an outermost edge of the closest lifting element 72, and a vertical distance Y from a reference, such as a lower surface of receptacle 70 of the lifting element, and the upper one of aligning holes 96 is located corresponding horizontal and vertical distances X and Y from mating portions of the nearest lifting element 72. The lower ones of pins 94 and holes 96 will be predetermined distances from the upper pins and holes or other suitable references.

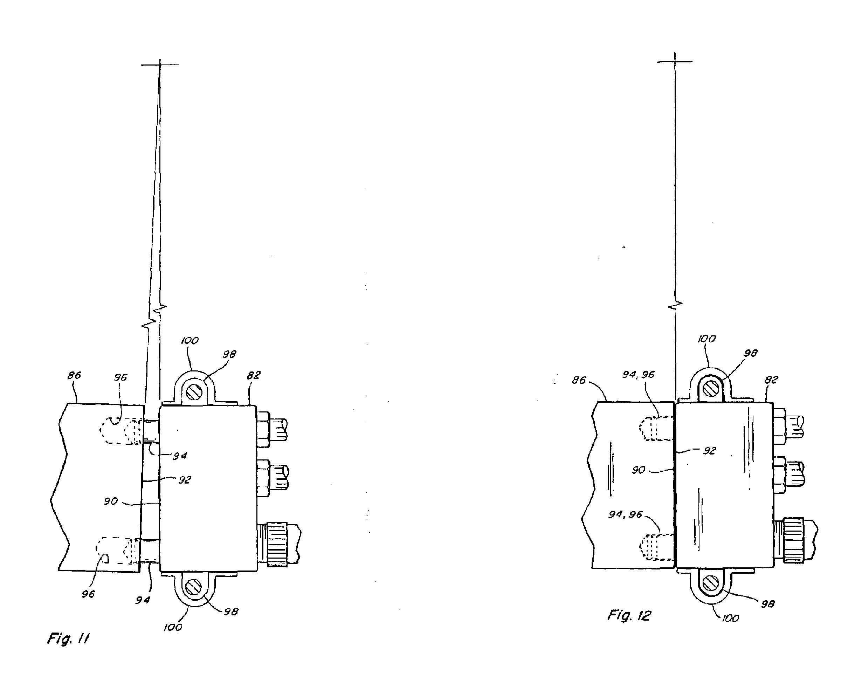

Referring more particularly to Figure 7, and also to Figures 10, 11 and 12, one or both of coupler blocks 82 and 86, here represented by first coupler block 82, can optionally be supported by resilient elements, such as elements 98 illustrated, to allow some limited horizontal and vertical movement, and even some limited forward and/or rearward movement and/or tilting, relative to the feeder or the header from which it is supported, here, represented by the side of feeder 50, to facilitate alignment and slidable receipt of pins 94 in holes 96, as discussed next. The other of coupler blocks 82 and 86 can be suitably mounted, for instance using a rigid bracket. Each resilient element 98 can be, for instance, a rubbery bushing, captured in a bracket 100 mounted on the coupler block, and which receives a rod 102 suitably connected to the side of feeder 50, for instance, using fasteners 104. Figures 10, 11 and 12, best illustrate the relative pivoting motions for bringing together of blocks 82 and 86, to bring surfaces 90 and 92 into abutting relation, and for automatically coupling the couplers 84 and 88 (Figures 5 and 6), and bringing electrical contacts 66 (also Figures 5 and 6) together, as the header is connected to the feeder in the above-described manner. These Figures, when viewed in the reverse order also illustrate the relative pivoting motions for uncoupling.

While a preferred embodiment of the invention has been described, it should be understood that the invention is not so limited, and modifications may be made without departing from the invention. The scope of the invention is defined by the appended claims, and all devices that come within the meaning of the claims, either literally or by equivalence, are intended to be embraced therein.

## Claims

1. An agricultural harvesting machine (20), comprising:
a self-propelled frame having a feeder (50) having a front end portion (52) having a forwardly facing inlet opening (62) for receiving a flow of harvested crops, a front interface structure (58) bounding the inlet opening (62), and apparatus (54) controllably operable for moving the front end portion (52) of the feeder (50) upwardly and downwardly relative to the frame;
a header (22) including harvesting apparatus (26) operable for harvesting crops from a field and conveyor apparatus (46) for conveying the harvested crops to a discharge opening (64), and the header (22) including a rear interface structure (60) bounding the discharge opening (64);
the front interface structure (58) of the feeder (50) and the rear interface structure (60) of the header (22) including lifting elements (68, 72), respectively, which are pivotably engageable when brought together in a predetermined manner with the lower portions (74, 76) of the interface structures (58, 60) spaced apart, such that when the feeder (50) is moved upwardly with the lifting elements (68, 72) cooperatively engaged and the lower portions (74, 76) of the interface structures (58, 60) spaced apart, the header (22) will be lifted by the feeder (50) and the lower portions (74, 76) of the interface structures (58, 60) will be relatively pivoted into at least substantially abutting relation to align the discharge opening (64) and the inlet opening (62) for passage of harvested crop material therethrough;
a first coupler block (82) supported on the feeder (50) and including at least one fluid coupler (84) and at least one electrical contact (66); and
a second coupler block (86) supported on the header (22) and including at least one fluid coupler (84) and at least one electrical contact (66);
**characterised in that** the fluid couplers (84) on the first coupler block (82) and on the second coupler block (86) are configured and positioned, respectively, so as to couple, and the electrical contacts (66) on the coupler blocks (82,86) are configured and positioned to be brought into contact, as the interface structures (58, 60) are relatively pivoted into the at least substantially abutting relation.

2. A harvesting machine according to claim 1, **characterised in that** at least one of the coupler blocks (82, 86) is supported for resilient sideward movement.

3. A harvesting machine according to claim 2, **characterised in that** at least one of the coupler blocks (82, 86) is supported by means of at least one resilient element (98) on at least one sidewardly extending rod (102).

4. A harvesting machine according to any of the preceding claims; **characterised in that** the fluid couplers (84) and the electrical contacts (66) are disposed on the coupler blocks (82, 86) to face in a direction of pivotal movement of the header (22) and the feeder (50).

5. A harvesting machine according to any of the preceding claims, **characterised in that** the first and the second coupler blocks (82, 86) are supported adjacent to sides of the front and the rear interface structures (58, 60), respectively.

6. A harvesting machine according to any of the preceding claims, **characterised in that** it further comprises apparatus (80) for releasably latching the header (22) to the feeder (50) when the interface structures (58, 60) are in the at least substantially abutting relation.

7. A harvesting machine according to any of the preceding claims, **characterised in that** one of the coupler blocks (82, 86) includes at least one aligning pin (94) slidably receivable in a hole (96) in the other of the coupler blocks (82, 86) as the interface structures (58, 60) are pivoted into the at least substantially abutting relation.

8. A harvesting machine according to claim 7, **characterised in that** at least one of the coupler blocks (82, 86) is resiliently supported so as to be movable to a limited extent to allow the slidable receipt of the at least one aligning pin (94) in the hole (96).

9. A harvesting machine according to any of the preceding claims, **characterised in that** the lifting elements (68, 72) comprise at least one hook (70) on the feeder (50), and a structure (72) on the header (22) cooperatively receivable within the hook.

10. A harvesting machine according to any of the preceding claims, **characterised in that** the fluid couplers (84) on the first coupler block (82) and on the second coupler block (86) are configured so as to automatically uncouple, as the interface structures (58, 60) are relatively pivoted away from the at least substantially abutting relation.

11. A method for automatically coupling fluid systems and electrical systems, respectively, of a header (22) and a feeder (50) of an agricultural harvesting machine (20), comprising steps of as the header (22) is lifted by the feeder (50) for coupling together therewith, comprising:
providing a lifting element (68) on a front upper portion of a feeder (50) configured for pivotally engaging a lifting element (72) on a rear upper portion of a header (22) as the lifting element (68) of the feeder (50) is moved upwardly into contact with the lifting element (72) on the header (22) with lower portions (74, 76) of the feeder (50) and the header (22) spaced apart, the lifting elements (68, 72) being further configured such that when pivotally engaged and the upward movement of the feeder (50) is continued, the header (22) will be lifted by the feeder (50) and pivoted so as to bring the lower portions (74, 76) of the feeder (50) and the header (22) together; and
providing a first coupler block (82) supported on the feeder (50) and including at least one fluid coupler (84) and at least one electrical contact (66), and a second coupler block (86) supported on the header (22) and including at least one fluid coupler (84) and at least one electrical contact (66), the fluid couplers (84) on the first coupler block (82) and on the second coupler block (86) being configured and positioned, respectively, so as to couple, and the electrical contacts (66) on the coupler blocks (82, 86) being configured and positioned so as to be brought into contact, as the lower portions (74, 76) of the feeder (50) and the header (22) are brought together,
**characterised in that** the method further comprises:
moving the lifting element (68) of the feeder (50) upwardly into contact with the lifting element (72) on the header (22) with lower portions (74, 76) of the feeder (50) and the header (22) spaced apart, and continuing the upward movement of the feeder (50) to lift and pivot the header (22) to bring the lower portions (74, 76) of the feeder (50) and the header (22) together so as to couple the couplers (84) and bring the electrical contacts (66) into contact.

12. A method according to claim 11, **characterised in that** at least one of the coupler blocks (82, 86) is supported for resilient movement relative to the other of the coupler blocks (82, 86).

13. A method according to claim 11 or 12, **characterised in that** the fluid couplers (84) and the electrical contacts (66) are disposed on the coupler blocks (82, 86) to face in a direction of pivotal movement of the header (22) and the feeder (50).

14. A method according to any of the claims 11 to 13, **characterised in that** the first and the second coupler blocks (82, 86) are supported adjacent to sides of front and rear interface structures (58, 60) of the header (22) and the feeder (50), respectively.

15. A method according to any of the claims 11 to 14, **characterised in that** it comprises a further step of latching the feeder (50) to the header (22) when the lower portions (74, 76) thereof are brought together.

16. A method according to any of the claims 11 to 15, **characterised in that** the lifting elements (68, 72) comprise at least one hook (70) on the feeder (50), and a structure (72) on the header (22) cooperatively receivable within the hook.

17. A method according to any of the claims 11 to 16, **characterised in that** the fluid couplers (84) on the first coupler block (82) and on the second coupler block (86) are configured so as to automatically uncouple as the lower portions (74, 76) of the feeder (50) and the header (22) are separated.

## Patentansprüche

1. Landwirtschaftliche Erntemaschine (20) mit:
einem selbstfahrenden Fahrgestell, das eine Zuführungsvorrichtung (50) mit einem vorderen Endteil (52), der eine nach vorne gerichtete Einlassöffnung (62) zum Empfang eines Stroms von geerntetem Erntematerial aufweist, eine vordere Verbindungsstruktur (58), die die Einlassöffnung (62) begrenzt, und Vorrichtungen (54) aufweist, die in steuerbarer Weise betreibbar sind, um den vorderen Endteil (52) der Zuführungsvorrichtung (50) gegenüber dem Fahrgestell nach oben und nach unten zu bewegen;
einem Vorsatzgerät (22), das eine Erntevorrichtung (26), die zum Ernten von Erntematerial von einem Feld betreibbar ist, und eine Fördervorrichtung (46) zum Fördern des geernteten Erntematerials zu einer Auslassöffnung (64) einschließt, wobei das Vorsatzgerät (22) eine hintere Verbindungsstruktur (60) einschließt, die die Auslassöffnung (64) begrenzt;
wobei die vordere Verbindungsstruktur (58) der Zuführungsvorrichtung (50) und die hintere Verbindungsstruktur (60) des Vorsatzgerätes (22) jeweils Anhebeelemente (68) bzw. (72) einschließen, die schwenkbar miteinander in Eingriff bringbar sind, wenn sie in einer vorgegebenen Weise zusammengeführt werden, während die unteren Teile (74, 76) der Verbindungsstrukturen (58, 60) einen Abstand voneinander aufweisen, so dass, wenn die Zuführungsvorrichtung (50) nach oben bewegt wird und die Anhebeelemente (68, 72) in zusammenwirkendem Eingriff stehen und die unteren Teile (74, 76) der Verbindungsstrukturen (58, 60) einen Abstand voneinander aufweisen, das Vorsatzgerät (22) durch die Zuführungsvorrichtung (50) angehoben wird und die unteren Teile (74, 76) der Verbindungsstrukturen (58, 60) relativ zueinander in eine zumindest im Wesentlichen aneinander anliegende Beziehung zueinander verschwenkt werden, um die Auslassöffnung (64) und die Einlassöffnung (62) für den Durchgang des geernteten Erntematerials durch diese hindurch auszurichten;
einem ersten Kopplerblock (82), der auf der Zuführungsvorrichtung (50) gehaltert ist und zumindest einen Strömungsmittel-Koppler (84) und zumindest einen elektrischen Kontakt (66) einschließt; und
einem zweiten Kopplerblock (86), der auf dem Vorsatzgerät (22) gehaltert ist und zumindest einen Strömungsmittel-Koppler (84) und zumindest einen elektrischen Kontakt (66) einschließt;
**dadurch gekennzeichnet, dass** die Strömungsmittel-Koppler (84) auf dem ersten Kopplerblock (82) und auf dem zweiten Kopplerblock (86) so konfiguriert und angeordnet sind, dass sie miteinander gekoppelt werden und die elektrischen Kontakte auf den Kopplerblöcken (82, 86) so konfiguriert und angeordnet sind, dass sie miteinander in Kontakt gebracht werden, wenn die Verbindungsstrukturen (58, 60) relativ zueinander in die zumindest im Wesentlichen aneinander anliegende Beziehung gebracht werden.

2. Erntemaschine nach Anspruch 1,
**dadurch gekennzeichnet, dass** zumindest einer der Kopplerblöcke (82, 86) für eine elastische Seitwärtsbewegung gehaltert ist.

3. Erntemaschine nach Anspruch 2,
**dadurch gekennzeichnet, dass** zumindest einer der Kopplerblöcke (82, 86) mit Hilfe von zumindest einem elastischen Element (98) auf zumindest einer sich seitwärts erstreckenden Stange (102) gehaltert ist.

4. Erntemaschine nach einem der vorhergehenden Ansprüche,
**dadurch gekennzeichnet, dass** die Strömungsmittel-Koppler (84) und die elektrischen Kontakte (86) auf den Kopplerblöcken (82, 86) derart angeordnet sind, dass sie in eine Richtung der Schwenkbewegung des Vorsatzgerätes (22) und der Zuführungsvorrichtung (50) weisen.

5. Erntemaschine nach einem der vorhergehenden Ansprüche,
**dadurch gekennzeichnet, dass** die ersten und die zweiten Kopplerblöcke (82, 86) benachbart zu den Seiten der vorderen bzw. hinteren Verbindungsstrukturen (58, 60) gehaltert sind.

6. Erntemaschine nach einem der vorhergehenden Ansprüche,
**dadurch gekennzeichnet, dass** sie weiterhin eine Vorrichtung (80) zur lösbaren Verriegelung des Vorsatzgerätes (22) an der Zuführungsvorrichtung (50) umfasst, wenn sich die Verbindungsstrukturen (58, 60) in der zumindest im Wesentlichen aneinander anliegenden Beziehung angeordnet sind.

7. Erntemaschine nach einem der vorhergehenden Ansprüche,
**dadurch gekennzeichnet, dass** einer der Kopplerblöcke (82, 86) zumindest einen Ausrichtbolzen (94) einschließt, der gleitend in einer Bohrung (96) in dem anderen der Kopplerblöcke (82, 86) aufnehmbar ist, wenn die Verbindungsstrukturen (58, 60) in die zumindest im Wesentlichen aneinander anliegende Beziehung verschwenkt werden.

8. Erntemaschine nach Anspruch 7,
**dadurch gekennzeichnet, dass** zumindest einer der Kopplerblöcke (82, 86) elastisch gehaltert ist, um in einem begrenzten Ausmaß beweglich zu sein, um die gleitende Aufnahme des zumindest einen Ausrichtbolzens (94) in der Bohrung (96) zu ermöglichen.

9. Erntemaschine nach einem der vorhergehenden Ansprüche,
**dadurch gekennzeichnet, dass** die Anhebeelemente (68, 72) zumindest einen Haken (70) auf der Zuführungsvorrichtung (50) umfassen, und dass eine Struktur (72) auf dem Vorsatzgerät (22) in zusammenwirkender Beziehung in dem Haken aufnehmbar ist.

10. Erntemaschine nach einem der vorhergehenden Ansprüche,
**dadurch gekennzeichnet, dass** die Strömungsmittel-Koppler (84) auf dem ersten Kopplerblock (82) und auf dem zweiten Kopplerblock ((6) so konfiguriert sind, dass sie sich automatisch entkoppeln, wenn die Verbindungsstrukturen (58, 60) voneinander aus der zumindest im Wesentlichen anliegenden Beziehung zueinander voneinander fort geschwenkt werden.

11. Verfahren zum automatischen Koppeln von Strömungsmittel-Systemen bzw. elektrischen Systemen eines Vorsatzgerätes (22) und einer Zuführungsvorrichtung (50) einer landwirtschaftlichen Erntemaschine (20), das beim Anheben des Vorsatzgerätes (22) durch die Zuführungsvorrichtung (50) zu deren Koppeln miteinander folgende Schritte umfasst:
Bereitstellen eines Anhebeelementes (68) auf einem vorderen oberen Teil einer Zuführungsvorrichtung (50), die für einen Schwenkeingriff mit einem Anhebeelement (72) auf einem hinteren oberen Teil des Vorsatzgerätes (22) konfiguriert ist, wenn das Anhebeelement (68) der Zuführungsvorrichtung (50) nach oben in Kontakt mit dem Anhebeelement (72) auf dem Vorsatzgerät (22) bewegt wird, während die unteren Teile (74, 76) der Zuführungsvorrichtung (50) und des Vorsatzgerätes (22) einen Abstand voneinander aufweisen, wobei die Anhebeelemente (68, 72) weiterhin so konfiguriert sind, dass, wenn sie in Schwenkeingriff stehen und die nach oben gerichtete Bewegung der Zuführungsvorrichtung (50) fortgesetzt wird, das Vorsatzgerät (22) von der Zuführungsvorrichtung (50) angehoben und verschwenkt wird, um die unteren Teile (74, 76) der Zuführungsvorrichtung (50) und des Vorsatzgerätes (22) zusammenzuführen; und
Bereitstellen eines ersten Kopplerblockes (82), der auf der Zuführungsvorrichtung (50) gehaltert ist und zumindest einen Strömungsmittel-Koppler (84) und zumindest einen elektrischen Kontakt (66) einschließt, und eines zweiten Kopplerblockes (86), der auf dem Vorsatzgerät (22) gehaltert ist und zumindest einen Strömungsmittel-Koppler (84) und zumindest einen elektrischen Kontakt (66) einschließt, wobei die Strömungsmittel-Koppler (84) auf dem ersten Kopplerblock (82) und auf dem zweiten Kopplerblock (86) so konfiguriert bzw. angeordnet sind, dass sie miteinander gekoppelt werden, und die elektrischen Kontakte (66) auf den Kopplerblöcken (82, 86) so konfiguriert und angeordnet sind, dass sie miteinander in Kontakt gebracht werden, wenn die unteren Teile (74, 76) der Zuführungsvorrichtung (50) und des Vorsatzgerätes (22) zusammengeführt werden,
**dadurch gekennzeichnet, dass** das Verfahren weiterhin Folgendes umfasst:
Bewegen des Anhebeelementes (68) der Zuführungsvorrichtung (50) nach oben in Kontakt mit dem Anhebeelement (72) des Vorsatzgerätes (22), wobei die unteren Teile (74, 76) der Zuführungsvorrichtung (50) und des Vorsatzgerätes (22) einen Abstand voneinander aufweisen, und Fortsetzen der nach oben gerichteten Bewegung der Zuführungsvorrichtung (50) zum Anheben und Verschwenken des Vorsatzgerätes (22), um die unteren Teile (74, 76) der Zuführungsvorrichtung (50) und des Vorsatzgerätes (22) zusammenzuführen, so dass die Koppler (84) gekoppelt und die elektrischen Kontakte (66) in Kontakt miteinander gebracht werden.

12. Verfahren nach Anspruch 11,
**dadurch gekennzeichnet, dass** zumindest einer der Kopplerblöcke (82, 86) für eine elastische Bewegung gegenüber dem anderen der Kopplerblöcke (82, 86) gehaltert ist.

13. Verfahren nach Anspruch 11 oder 12,
**dadurch gekennzeichnet, dass** die Strömungsmittel-Koppler (84) und die elektrischen Kontakte (66) auf den Kopplerblöcken (82, 86) so angeordnet sind, dass sie in eine Richtung der Schwenkbewegung des Vorsatzgerätes (22) und der Zuführungsvorrichtung (50) weisen.

14. Verfahren nach einem der Ansprüche 11 bis 13,
**dadurch gekennzeichnet, dass** die ersten und zweiten Kopplerblöcke (82, 86) benachbart zu den Seiten der vorderen und hinteren Verbindungsstrukturen (58, 60) des Vorsatzgerätes (22) bzw. der Zuführungsvorrichtung (50) gehaltert sind.

15. Verfahren nach einem der Ansprüche 11 bis 14,
**dadurch gekennzeichnet, dass** es einen weiteren Schritt der Verriegelung der Zuführungsvorrichtung (50) gegenüber dem Vorsatzgerät (22) umfasst, wenn die unteren Teile (74, 76) hiervon zusammengeführt werden.

16. Verfahren nach einem der Ansprüche 11 bis 15,
**dadurch gekennzeichnet, dass** die Anhebeelemente (68, 72) zumindest einen Haken (70) auf der Zuführungsvorrichtung (50) und eine Struktur (72) auf dem Vorsatzgerät (22) umfassen, die in zusammenwirkender Weise in dem Haken aufnehmbar ist.

17. Verfahren nach einem der Ansprüche 11 bis 16,
**dadurch gekennzeichnet, dass** die Strömungsmittel-Koppler (84) auf dem ersten Kopplerblock (82) und auf dem zweiten Kopplerblock (86) so konfiguriert sind, dass sie automatisch entkoppelt werden, wenn die unteren Teile (74, 76) der Zuführungsvorrichtung (50) und des Vorsatzgerätes (22) voneinander getrennt werden.

## Revendications

1. Machine de récolte agricole (20), comprenant :
un châssis autopropulsé comprenant un dispositif d'alimentation (50) comportant une portion d'extrémité avant (52) ayant une ouverture d'entrée (62) orientée vers l'avant pour recevoir un flux de produits récoltés, une structure de jonction avant (58) limitant l'ouverture d'entrée (62), et un dispositif (54) pouvant fonctionner de manière commandée pour déplacer la portion d'extrémité avant (52) du dispositif d'alimentation (50) vers le haut et vers le bas par rapport au châssis,
une tête de coupe (22) comportant un dispositif de récolte (26) pouvant fonctionner pour récolter des produits agricoles d'un champ et un dispositif de convoyeur (46) destiné à transporter les produits de récolte vers une ouverture de déversement (64), la tête de coupe (22) incluant une structure de jonction arrière (60) limitant l'ouverture de déversement (64),
la structure de jonction avant (58) du dispositif d'alimentation (50) et la structure de jonction arrière (60) de la tête de coupe (22) comprenant respectivement des organes de levage (68, 72) qui peuvent être engagés de façon pivotante lorsqu'ils sont mis en contact dans une position prédéterminée, les portions inférieures (74, 76) des structures de jonction (58, 60) étant espacées, de telle sorte que, lorsque le dispositif d'alimentation (50) est déplacé vers le haut, les organes de levage (68, 72) étant engagés en coopération et les portions inférieures (74, 76) des structures de jonction (58, 60) étant espacées, la tête de coupe (22) est soulevée par le dispositif d'alimentation (50) et les portions inférieures (74, 76) des structures de jonction (58, 60) sont pivotées de façon relative dans une relation au moins essentiellement de butée pour aligner l'ouverture de déversement (64) et l'ouverture d'entrée (62), afin de permettre le passage de la matière de produit récolté au travers celles-ci,
un premier bloc de coupleur (82) porté sur le dispositif d'alimentation (50) et comportant au moins un coupleur hydraulique (84) et au moins un contact électrique (66), et
un second bloc de coupleur (86) porté sur la tête de coupe (22) et comportant au moins un coupleur hydraulique (84) et au moins un contact électrique (66),
**caractérisée en ce que** les coupleurs hydrauliques (84) sur le premier bloc de coupleur (82) et sur le second bloc de coupleur (86) sont respectivement configurés et positionnés de sorte à se raccorder, et les contacts électriques (66) sur les blocs de coupleur (82, 86) sont configurés et positionnés pour être mis en contact lorsque les structures de jonction (58, 60) sont pivotées l'une par rapport à l'autre dans la relation au moins essentiellement de butée.

2. Machine de récolte agricole selon la revendication 1, **caractérisée en ce qu'**au moins l'un des blocs de coupleur (82, 86) est maintenu pour permettre un mouvement latéral élastique.

3. Machine de récolte agricole selon la revendication 2, **caractérisée en ce qu'**au moins l'un des blocs de coupleur (82, 86) est maintenu au moyen d'au moins un organe résilient (98) sur au moins une tige extensible latéralement (102).

4. Machine de récolte agricole selon l'une quelconque des revendications précédentes, **caractérisée en ce que** les coupleurs hydrauliques (84) et les contacts électriques (66) sont disposés sur les blocs de coupleur (82, 86) pour être orientés dans le sens du mouvement de pivotement de la tête de coupe (22) et du dispositif d'alimentation (50).

5. Machine de récolte agricole selon l'une quelconque des revendications précédentes, **caractérisée en ce que** les premier et second blocs de coupleur (82, 86) sont portés respectivement de façon adjacente aux côtés des structures de jonction avant et arrière (58, 60).

6. Machine de récolte agricole selon l'une quelconque des revendications précédentes, **caractérisée en ce qu'**elle comprend en plus un dispositif (80) pour verrouiller de façon amovible la tête de coupe (22) au dispositif d'alimentation (50) lorsque les structures de jonction (58, 60) sont dans la relation au moins essentiellement de butée.

7. Machine de récolte agricole selon l'une quelconque des revendications précédentes, **caractérisée en ce qu'**au moins l'un des blocs de coupleur (82, 86) comprend au moins une broche d'alignement (94) pouvant être reçue de façon coulissante dans un trou (96) dans l'autre des blocs de coupleur (82, 86) lorsque les structures de jonction (58, 60) sont pivotées dans la relation au moins essentiellement de butée.

8. Machine de récolte agricole selon la revendication 7, **caractérisée en ce qu'**au moins l'un des blocs de coupleur (82, 86)) est porté de façon résiliente de manière à être mobile dans une mesure limitée pour permettre la réception coulissante de la au moins une broche d'alignement (94) dans le trou (96).

9. Machine de récolte agricole selon l'une quelconque des revendications précédentes, **caractérisée en ce que** les organes de levage (68, 72) comprennent au moins une griffe (70) sur le dispositif d'alimentation (50), et une structure (72) sur la tête de coupe (22) pouvant être reçue en coopération dans la griffe.

10. Machine de récolte agricole selon l'une quelconque des revendications précédentes, **caractérisée en ce que** les coupleurs hydrauliques (84) sur le premier bloc de coupleur (82) et sur le second bloc de coupleur (86) sont configurés de sorte à se désaccoupler automatiquement lorsque les structures de jonction (58, 60) sont pivotées l'une par rapport à l'autre en s'éloignant de la relation au moins essentiellement de butée.

11. Procédé d'accouplement automatique de systèmes hydrauliques et de systèmes électriques, respectivement, d'une tête de coupe (22) et d'un dispositif d'alimentation (50) d'une machine de récolte agricole (20), comprenant des étapes d'accouplement de ces systèmes, lorsque la tête de coupe (22) est soulevée par le dispositif d'alimentation (50), consistant à :
prévoir un organe de levage (68) sur une portion supérieure avant d'un dispositif d'alimentation (50) configuré pour engager de façon pivotante un organe de levage (72) sur une portion arrière supérieure d'une tête de coupe (22) lorsque l'organe de levage (68) du dispositif d'alimentation (50) est déplacé vers le haut pour venir en contact avec l'organe de levage (72) sur la tête de coupe (22), les portions inférieures (74, 76) du dispositif d'alimentation (50) et de la tête de coupe (22) étant espacées et les organes de levage (68, 72) étant en plus configurés de telle manière que lorsqu'ils sont engagés en pivotant et lorsque le mouvement vers le haut du dispositif d'alimentation (50) continue, la tête de coupe (22) est soulevée par le dispositif d'alimentation (50) et pivotée de manière à rassembler les portions inférieures (74, 76) du dispositif d'alimentation (50) et de la tête de coupe (22), et
comprenant un premier bloc de coupleur (82) porté sur le dispositif d'alimentation (50) et comportant au moins un coupleur hydraulique (84) et au moins un contact électrique (66), et un second bloc de coupleur (86) porté sur la tête de coupe (22) et comportant au moins un coupleur hydraulique (84) et au moins un contact électrique (66), les coupleurs hydrauliques (84) sur le premier bloc de coupleur (82) et sur le second bloc de coupleur (86) étant configurés et positionnés de sorte à se raccorder, et les contacts électriques (66) sur les blocs de coupleur (82, 86) étant configurés et positionnés pour être mis en contact, lorsque les portions inférieures (74, 76) du dispositif d'alimentation (50) et de la tête de coupe (22) sont rassemblées,
**caractérisé en ce que** le procédé comprend en plus les étapes consistant à:
déplacer l'organe de levage (68) du dispositif d'alimentation (50) vers le haut pour le mettre en contact avec l'organe de levage (72) sur la tête de coupe (22), les portions inférieures (74, 76) du dispositif d'alimentation (50) et de la tête de coupe (22) étant espacées, et continuer le mouvement vers le haut du dispositif d'alimentation (50) pour soulever et faire pivoter la tête de coupe (22) pour rassembler les portions inférieures (74, 76) du dispositif d'alimentation (50) et de la tête de coupe (22) de façon à raccorder les coupleurs (84) et mettre en contact les contacts électriques (66).

12. Procédé selon la revendication 11, **caractérisé en ce qu'**au moins un des blocs de coupleur (82, 86) est porté pour permettre un mouvement résilient visà-vis de l'autre des blocs de coupleur (82, 86).

13. Procédé selon la revendication 11 ou 12, **caractérisé en ce que** les coupleurs hydrauliques (84) et les contacts électriques (66) sont disposés sur les blocs de coupleur (82, 86) pour être orientés dans le sens du mouvement de pivotement de la tête de coupe (22) et du dispositif d'alimentation (50).

14. Procédé selon l'une quelconque des revendications 11 à 13, **caractérisé en ce que** les premier et second blocs de coupleur (82, 86) sont portés respectivement de façon adjacente aux côtés des structures de jonction avant et arrière (58, 60)..

15. Procédé selon l'une quelconque des revendications 11 à 14, **caractérisé en ce qu'**il comprend une étape complémentaire consistant à verrouiller le dispositif d'alimentation (50) sur la tête de coupe (22) lorsque les portions inférieures (74, 76) d'entre eux sont rassemblées.

16. Procédé selon l'une quelconque des revendications 11 à 15, **caractérisé en ce que** les organes de levage (68, 72) comprennent au moins une griffe (70) sur le dispositif d'alimentation (50), et une structure (72) sur la tête de coupe (22) pouvant être reçue en coopération dans la griffe..

17. Procédé selon l'une quelconque des revendications 11 à 16, **caractérisé en ce que** les coupleurs hydrauliques (84) sur le premier bloc de coupleur (82) et sur le second bloc de coupleur (86) sont configurés de manière à se désaccoupler automatiquement lorsque les portions inférieures (74, 76) du dispositif d'alimentation (50) et de la tête de coupe (22) sont séparées.
